# EUROPÄISCHE PATENTSCHRIFT

(11) **EP 1 161 356 B1**
(45) Veröffentlichungstag und Bekanntmachung des Hinweises auf die Patenterteilung: **05.11.2003**
(21) Anmeldenummer: 00991289.0
(22) Anmeldetag: 13.12.2000
(51) Int. Cl.: B60G 21/055, B60G 17/02, F15B 15/08

(54) **STABILISATORANORDNUNG FÜR DAS FAHRWERK EINES FAHRZEUGES**
ANTI-ROLL BAR ASSEMBLY FOR THE CHASSIS OF A MOTOR VEHICLE
DISPOSITIF DE BARRE STABILISATRICE DESTINE AU CHASSIS D'UNE AUTOMOBILE

(30) Priorität: 21.01.2000 DE 10002455
(43) Veröffentlichungstag der Anmeldung: 12.12.2001
(73) Patentinhaber: Bayerische Motoren Werke Aktiengesellschaft, 80809 München (DE)
(72) Erfinder: SCHMIDT, Roland, 82131 Stockdorf (DE); VAN DER KNAAP, Albert, NL-2924 TM Krimpen aan den IJssel (NL); WEY, Thorsten, 85737 Ismaning (DE)
(86) Internationale Anmeldenummer: EP0013397
(87) Internationale Veröffentlichungsnummer: WO01053121

(56) Entgegenhaltungen:
- EP-A- 0 428 439
- EP-A- 0 949 421
- DE-A- 2 844 028
- GB-A- 2 318 771
- US-A- 3 198 539
- US-A- 3 391 722
- PATENT ABSTRACTS OF JAPAN vol. 1996, no. 09, 30. September 1996 (1996-09-30) & JP 08 113025 A (MITSUBISHI MOTORS CORP), 7. Mai 1996 (1996-05-07)

## Beschreibung

Die Erfindung betrifft eine Stabilisatoranordnung für das Fahrwerk eines Kraftfahrzeuges mit einem zwischen zwei Stabilisatorhälften eingebundenen und diese bedarfsweise gegeneinander um einen Verdrehwinkel verdrehenden Aktuator, der aus einem Verstellantrieb sowie einem diesem nachgeschalteten Kurvenbahn-Getriebe besteht, mit zwei den Stabilisatorhälften zugeordneten, um eine gemeinsame Längsachse gegeneinander verdrehbaren und als Kurvenbahn-Träger fungierenden Hohlzylindern, in deren sich voneinander unterscheidenden und sich zumindest abschnittsweise im wesentlichen in Richtung der gemeinsamen Längsachse der koaxial zueinander angeordneten Hohlzylinder erstreckenden Kurvenbahnen ein mittels des Verstellantriebs längs der gemeinsamen Längsachse und dabei auch längs dieser Kurvenbahnen verschiebbares Koppelelement geführt ist. Zum technischen Umfeld wird neben der DE 198 46 275 A1 und der DE 198 15 314 A1 insbesondere auf die gattungsbildende US 3,198,539 verwiesen.

Mit einem Kraftfahrzeug-Fahrwerk, dessen Stabilisator in eine erste der Aufhängung des linken Rades einer Fahrzeug-Achse zugeordneten Stabilisatorhälfte und in eine zweite der Aufhängung des rechten Rades dieser Fahrzeug-Achse zugeordneten Stabilisatorhälfte unterteilt ist, und bei dem diese Stabilisatorhälften um deren gemeinsame Längsachse gegeneinander verdrehbar sind, kann gegenüber Fahrwerken mit einstückigem Stabilisator eine deutlich gesteigerte Wankstabilität erzielt werden. Dabei ist zwischen den beiden Stabilisatorhälften ein geeigneter Schwenkmotor oder allgemein Aktuator vorgesehen, der aufgrund einer geeigneten Ansteuerung diese Stabi-Stabilisatorhälften bedarfsgerecht gegeneinander verdreht. Dieser Schwenkmotor oder Aktuator ist in der eingangs erstgenannten Schrift in Form eines hydraulischen Drehantriebes ausgebildet.

Anstelle eines hydraulischen Drehantriebes kann auch ein elektromechanischer Aktuator vorgesehen werden, der einen Elektromotor und ein mechanisches Getriebe sowie eine Feststellbremse umfaßt, wie dies bspw. in der DE 198 46 275 A1 beschrieben ist. Dann erhält man einen sog. elektromechanischen Stabilisator, bestehend aus den beiden Stabilisatorhälften, die durch einen elektromechanischen Aktuator miteinander verbunden sind. Wie bereits geschildert dient auch dieser elektromechanische Aktuator dazu, gezielt eine Verdrehung der beiden Stabilisator-Hälften zueinander zu erreichen, damit ein gewünschtes Stabilisatormoment erzeugt wird, welches dann das Wanken des Fahrzeug-Aufbaus verhindert.

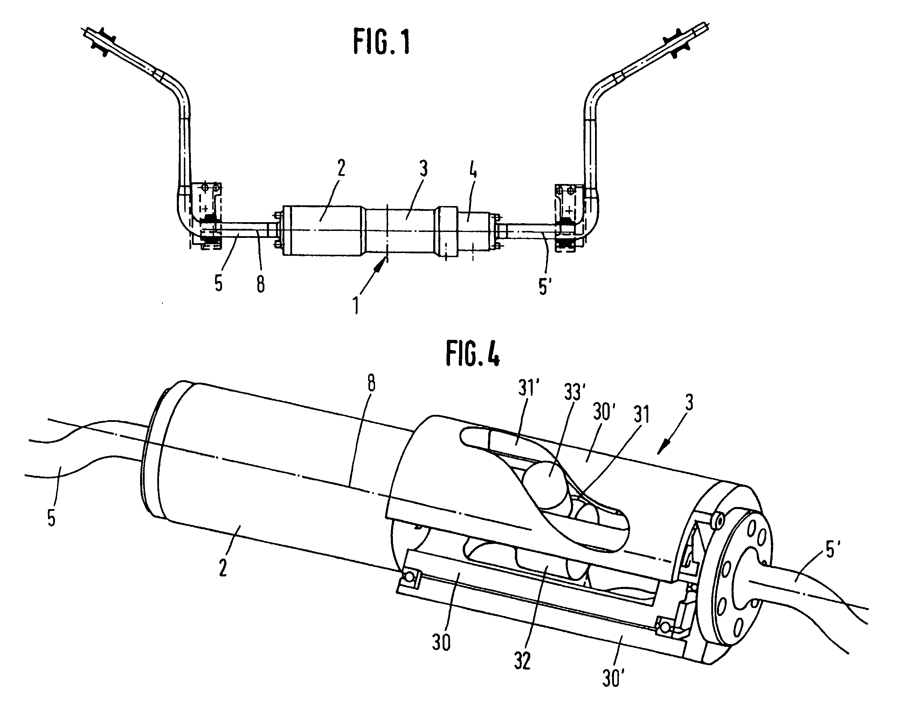

Ein solcher elektromechanischer Aktuator ist vereinfacht in der beigefügten **Figur 1** unter der Bezugsziffer 1 dargestellt und umfasst einen Verstellantrieb 2 in Form eines Elektromotors und ein mechanisches Getriebe 3 sowie eine Feststellbremse 4. Die gewählte Getriebeübersetzung des bevorzugt als dreistufiges Planetengetriebe ausgeführten Getriebes 3 ist konstant. Die Dynamik des Gesamtsystems ist dabei maßgeblich durch die Getriebeübersetzung, die Massenträgheit des Systems und die Torsionssteifigkeit der beiden mit den Bezugsziffern 5, 5' versehenen Stabilisatorhälften gekennzeichnet. Die besagte Feststellbremse 4 wird dabei benötigt, um den Elektromotor 2 vor einer Überlastung infolge hoher Stabilisatormomente zu schützen.

Elektromotore zeichnen sich üblicherweise durch hohe Drehzahlen und geringe Nennmomente aus und sind per se für den vorliegenden Anwendungsfall in einem elektromechanischen Stabilisator nicht besonders gut geeignet. Der elektromechanische Aktuator hierin sollte nämlich hohe Drehmomente bei geringen Drehwinkeln erzeugen. Für das benötigte Getriebe ergibt sich aus diesem Widerspruch zwangsläufig eine hohes Übersetzungsverhältnis, welches jedoch Nachteile mit sich bringt. So resultiert hieraus nicht nur eine große Baugröße (aufgrund der erforderlichen Planetenstufen), sondern auch ein relativ niedriger Wirkungsgrad (aufgrund der unvermeidbaren Reibungsverluste). In Abhängigkeit vom jeweiligen Anwendungsfall sind derart hohe Drehmomente am Stabilisator zu realisieren, daß die hierfür erforderlichen hohen Übersetzungsverhältnisse überhaupt nicht realisierbar sind, weil der zur Verfügung stehende Bauraum sowie der Wirkungsgrad eine physikalische Obergrenze definieren.

Aus der eingangs ebenfalls genannten DE 198 15 314 A1 ist ein hydraulisch betätigter Drehsteller für Fahrstabilisatoren von Kraftfahrzeugen bekannt, der einen axial verschiebbaren, druckbeaufschlagbaren Kolben und eine mit dem Kolben koaxial verbundene Buchse besitzt. Diese Buchse erstreckt sich in einem radial von einem Außenkörper und einem Innenkörper begrenzten Ringraum und ist radial innen und radial außen jeweils mit einer Schrägverzahnung versehen, wobei deren radial innere und radial äußere Verzahnung bei entgegengesetzter Pfeilung mit entsprechenden Verzahnungen des Innenkörpers und Außenkörpers in Eingriff steht, derart, dass bei axialer Verschiebung des Kolbens der Innenkörper und der Außenkörper gegensinning zueinander verdrehbar sind. Wegen der Vielzahl der Schrägverzahnungen an den beteiligten Bauelementen (Buchse, Außenkörper, Innenkörper) ist dieser bekannte Drehsteller jedoch äußerst aufwending in der Fertigung.

Schließlich zeigt die eingangs ebenfalls genannte US 3,198,539 einen hydraulischen Aktuator, der zwischen den beiden jeweils in sich abgewinkelten Achshälften eines zweispurigen Fahrzeugs angeordnet ist und diese beiden Achshälften derart gegeneinander verdrehen kann, dass der sich an diesen abgewinkelten Achshälften abstützende Fahrzeug-Aufbau angehoben oder abgesenkt werden kann. Diese Achskonstruktion hat gewisse Ähnlichkeiten mit einer geteilten Stabilisatoranordnung an einem Fahrzeug-Fahrwerk, wobei der in dieser Schrift gezeigte Aktuator aus einem hydraulisch betätigten Verstellkolben besteht, der beidseitig mit einer Kolbenstange versehen ist, der Ende jeweils in einer Kurvenbahn geführt ist, wobei die beiden Kurvenbahnen in beidseitig des Verstellkolbens vorgesehenen Hohlzylindern vorgesehen sind. Dabei ist der in Fahrzeug-Fahrtrichtung betrachtet linke Hohlzylinder mit der linken Achshälfte und der rechte Hohlzylinder mit der rechten Achshäfte drehfest verbunden. Die Kurvenbahnen im linken und rechten Hohlzylinder verlaufen hier spiegelsymmetrisch zueinander und zwar derart, dass die beiden Hohlzylinder bei einer Verlagerung des Verstellkolbens längs der sich quer zur Fahrzeug-Fahrtrichtung erstreckenden Längsachse der beiden koaxial angeordneten Hohlzylinder derart verdreht werden, dass über die daran befestigten abgewinkelten Achshälften der Fahrzeug-Aufbau angehoben oder abgesenkt wird. Hier ist somit ein sog. Kurvenbahngetriebe realisiert, mit welchem auf relativ einfache Weise relativ hohe Kräfte oder Momente übertragen werden können.

Die Figurendarstellung der genannten US 3,198,539 zeigt aber auch einen Nachteil, nämlich einen relativ hohen Bauraumbedarf. Würde man diese für Achshälften bekannte Aktuator-Bauart praktisch gleich auf eine geteilte Stabilisatoranordnung eines Fahrzeug-Fahrwerks übertragen, so bliebe überhaupt kein Bauraum für die sich quer zur Fahrzeug-Fahrtrichtung erstreckenden Stabilisatorhälften. Letztere werden aber wegen ihrer elastischen Federeigenschaften weiterhin benötigt.

An einer Stabilsisatoranordnung nach dem Oberbegriff des Anspruchs 1, die das aus der US 3,198,539 bekannte Aktuatorprinzip enthält, Maßnahmen zur Bauraumreduzierung aufzuzeigen, ist Aufgabe der vorliegenden Erfindung. Die Lösung dieser Aufgabe ist dadurch gekennzeichnet, dass die beiden Hohlzylinder ineinander verschachtelt sind.

Vorteilhafte Aus- und Weiterbildungen sind Inhalt der Unteransprüche. Dabei sei an dieser Stelle ausdrücklich darauf hingewiesen, daß der Verstellantrieb keineswegs in Form eines Elektromotors ausgebildet sein muß, jedoch sein kann. Die besonderen Vorteile des vorgeschlagenen Getriebes kommen jedoch auch bei anderen Verstellantrieben zum Tragen, so bspw. in Verbindung mit einer das sog. Koppelelement längs der Kurvenbahnen verschiebenden, bevorzugt hydraulischen Zylinder-Kolben-Einheit.

Zunächst ausgehend von der Erkenntnis, daß mit dem erforderlichen Getriebe maximale Verdrehwinkel in der Größenordnung von 45° erzeugt bzw. umgesetzt werden müssen, wird ein sog. und für einen vergleichbaren Anwendungsfall bereits bekanntes Kurvenbahn-Getriebe vorgeschlagen. Dabei ist ein sog. Koppelelement gleichzeitig in zwei unterschiedlichen Kurvenbahnen geführt, die ihrerseits in zwei voneinander getrennten Kurvenbahn-Trägern vorgesehen sind, die gegeneinander um eine gemeinsame Längsachse verdrehbar sind. Am ersten Kurvenbahn-Träger ist die eine Stabilsatorhälfte und am zweiten Kurvenbahn-Träger die andere Stabilisatorhälfte befestigt und die Kurvenbahnen sind im Hinblick auf den genannten maximal auftretenden Verdrehwinkel von ca. 45° derart ausgeführt, dass sie sich zumindest abschnittsweise im wesentlichen in Richtung der gemeinsamen Längsachse erstrecken. Wird nun das Koppelelement mittels des Verstellantriebes längs der beiden sich voneinander unterscheidenden Kurvenbahnen verschoben, so werden zwangsläufig die beiden Kurvenbahnträger relativ zueinander bewegt, so daß hieraus eine Verdrehbewegung der daran befestigten Stabilisatorhälften gegeneinander erzielbar ist. Dabei können mit einem derartigen Kurvenbahngetriebe relativ hohe Kräfte bzw. Drehmomente übertragen werden, ohne daß hierfür großer Bauraum benötigt wird. Insbesondere kann das sog. Koppelelement dann auch einfach von einem Elektromotor längs der Kurvenbahnen verschoben werden, so bspw. unter Zwischenschaltung einer (einfachen) Gewindespindel.

Besonders einfach kann die gewünschte Verdrehbewegung der Stabilisatorhälften durch eine Relativbewegung der sog. Kurvenbahn-Träger gegeneinander dann erzielt werden, wenn die Kurvenbahn-Träger im wesentlichen hohlzylinderförmig ausgebildet und koaxial zueinander sowie im Anbindungsbereich der Stabilisatorhälften auch koaxial zu diesen angeordnet sind. Um dabei den benötigten Bauraum zu minimieren, wird nun vorgeschlagen, die hohlzylindrischen Kurvenbahnträger, die somit auch als Hohlzylinder bezeichnet werden, geeignet ineinander zu verschachteln, so dass sie nicht - wie im bekannten Stand der Technik - koaxial in Reihe angeordnet werden müssen.

Dabei bestehen verschiedene Möglichkeiten, wie die beiden Hohlzylinder verschachtelt und somit quasi ineinander angeordnet werden können. So können die Durchmesser der Hohlyzylinder unterschiedlich sein, so dass es möglich ist, die beiden Hohlyzylinder nicht nur koaxial, sondern auch konzentrisch zueinander anzuordnen, d.h. den einen Hohlzylinder innerhalb des anderen vorzusehen. Alternativ können die beiden Hohlzylinder aber auch im wesentlichen gleiche Durchmesser besitzen und mit ihren Mantelflächen, die dann selbstverständlich keine geschlossenen, sondern jeweils aufgebrochene Zylinder darstellen, ineinander verschachtelt sein.

Eine funktional einfache sowie noch weiter kompakte und daher so wenig Bauraum als möglich benötigende Anordnung ergibt sich dabei, wenn das längs der Längsachse der koaxial zueinander angeordneten Hohlzylindern verschiebbare Koppelelement im wesentlichen zentral innerhalb der Hohlzylinder angeordnet ist. Die Reibungsverluste eines derartigen Kurvenbahn-Getriebes können gering gehalten werden, wenn das Koppelelement über Stützrollen in die beiden Kurvenbahnen eingreift. Dabei kann das Koppelelement mittels einer motorisch, insbesondere elektromotorisch angetriebenen Gewindespindel oder mittels einer Zylinder-Kolben-Einheit längsverschoben werden, wobei dann die Stützrollen in den Kurvenbahnen abwälzen und somit die Hohlzylinder bzw. sog. Kurvenbahn-Träger gegeneinander verdrehen.

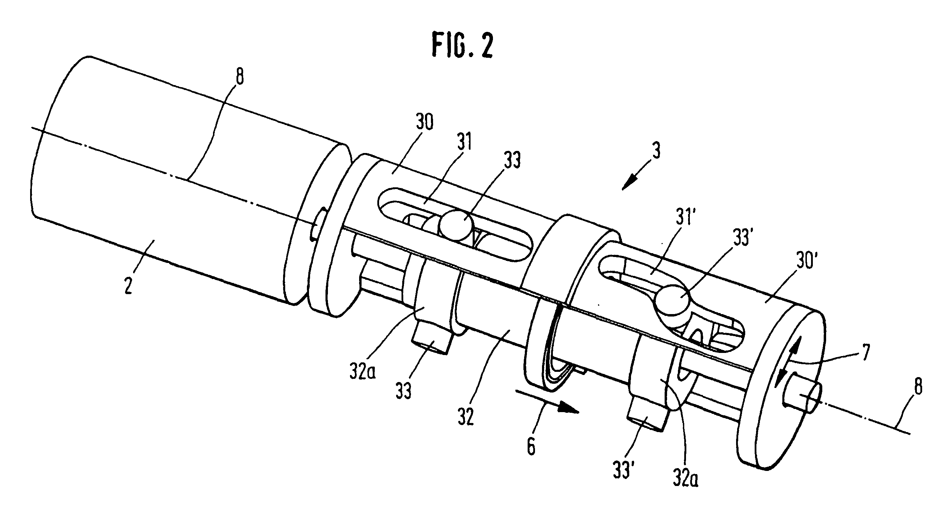

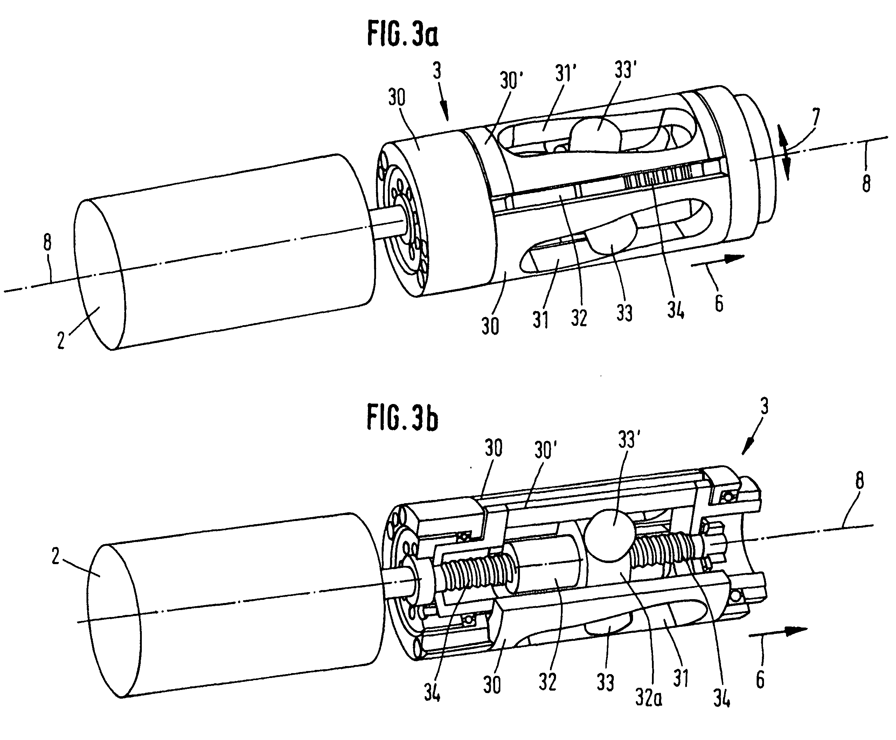

Im folgenden wird die Erfindung anhand zweier bevorzugter und in den beigefügten Figuren 3a, 3b, 4 dargestellter Ausführungsbeispiele weiter erläutert, wobei die beigefügte **Figur 2** der Erläuterung des den beiden Ausführungsbeispielen gemeinsamen Funktionsprinzips dient. Während dabei die **Figur 4** einen erfindungsgemäßen hier elektromechanischen Aktuator 1zumVerdrehen zweier Stabilisatorhälften gegeneinander in räumlicher Darstellung zeigt, ist in **Figur 3a** eine weitere Ausführungsform in gleicher Weise gezeigt, die in **Figur 3b** nochmals aufgebrochen dargestellt ist.

In sämtlichen Darstellungen umfaßt der Aktuator 1 einen als Elektromotor ausgebildeten Verstellantrieb 2 sowie ein mechanisches Getriebe 3 in Form eines sog. Kurvenbahn-Getriebes, für welches im weiteren ebenso die Bezugsziffer 3 verwendet wird. Das Kurvenbahn-Getriebe 3 besteht u.a. aus zwei sog. Kurvenbahn-Trägem 30, 30', in denen jeweils eine Kurvenbahn 31, 31' vorgesehen ist. Die Kurvenbahn-Träger 30, 30' sind in Form von koaxial zueinander angeordneten Hohlzylindern ausgebildet, für welche im folgenden ebenfalls die Bezugsziffern 30, 30' verwendet werden. In die Mantelflächen dieser Hohlzylinder 30, 30' sind dabei die im wesentlichen in Richtung der gemeinsamen Zylinder-Längsachse 8, dabei jedoch auch zumindest bereichsweise und zumindest geringfügig gegenüber dieser geneigt verlaufenden Kurvenbahnen 31, 31' eingebracht, wobei es funktionswesentlich ist, daß sich die beiden Kurvenbahnen 31, 31' in ihrem Verlauf voneinander unterscheiden.

Am ersten Kurvenbahn-Träger 30 ist die eine Stabilsatorhälfte (bspw. 5; vgl. **Fig.1**) und am zweiten Kurvenbahn-Träger 30' die andere Stabilisatorhälfte (bspw. 5'; vgl. **Fig.1**) befestigt, was jedoch nicht figürlich dargestellt ist. Lediglich in **Fig.4** ist ein Bruchteil der Stabilisatorhälfte 5 gezeigt, woraus hervorgeht, daß auch die Stabilisatorhälften 5, 5' im Bereich dieser Befestigung koaxial zu den Hohlzylindern 30, 30' angeordnet sind.

In den beiden Kurvenbahnen 31, 31' gleichzeitig geführt ist ein sog. Koppelelement 32, wie besonders gut aus den **Figuren 2 und 3b** hervorgeht. Dieses im wesentlichen zentral innerhalb der Hohlzylinder 30, 30' angeordnete und längs deren gemeinsamer Zylinder-Längsachse 8 in bzw. gegen Pfeilrichtung 6 verschiebbare Koppelelement 32 trägt zumindest zwei sog. Stützrollen 33, 33', die jeweils um eine nicht dargestellte Achse, die senkrecht zur genannten Längsachse 8 verläuft, verdrehbar sind. Dabei greift die Stützrolle 33 in die Kurvenbahn 31 und die Stützrolle 33' in die Kurvenbahn 31' ein. Im übrigen ist das Koppelelement 32 mit zumindest einem abseits der Stützrollen 33, 33' liegenden sog. führenden Flächenabschnitt 32a an der Innenseite der Mantelfläche zumindest eines der beiden, bevorzugt jedoch beider Hohlzylinder 30, 30' derart geführt, daß die bereits erwähnte Verschiebebewegung des Koppelelementes 32 in bzw. gegen Pfeilrichtung 6 möglich ist.

Wird nun das Koppelelement 32 mittels des Verstellantriebes 2 wie beschrieben in oder gegen Pfeilrichtung 6, d.h. im wesentlichen längs der beiden sich voneinander unterscheidenden Kurvenbahnen 31, 31' verschoben, so werden zwangsläufig die beiden Hohlzylinder / Kurvenbahnträger 30, 30' relativ zueinander verdreht, so wie dies durch den Doppelpfeil 7 dargestellt ist. Demzufolge ist aus einer Längsverschiebung (6) des Koppelelementes 32 eine gegenseitige Verdrehbewegung (7) der an den Hohlzylindern 30, 30' befestigten Stabilisatorhälften 5, 5' (vgl. Fig.1) erzielbar.

In sämtlichen Ausführungsbeispielen ist das Koppelelement 32 mittels einer vom insbesondere elektromotorischen Verstellantrieb 2 in Rotation versetzbaren Gewindespindel 34 in Abhängigkeit von deren Drehrichtung in bzw. gegen Pfeilrichtung 6 verschiebbar, wie besonders gut aus **Fig. 3b** hervorgeht. Bei entsprechend selbsthemmender Auslegung dieses Getriebes 3 wird dann im übrigen die in Verbindung mit **Fig.1** erwähnte Feststellbremse (Bezugsziffer 4) nicht benötigt. Anstelle dieses Verstellantriebes 2 mit der Gewindespindel 34 kann aber auch eine hydraulische Zylinder-Kolben-Einheit vorgesehen sein, um das Koppelelement 32 wie gewünscht verschieben zu können.

Bei der der Erläuterung dienenden Darstellung nach **Figur 2** sind die beiden Hohlzylinder 30, 30' koaxial in Reihe hintereinander angeordnet. Hierbei erkennt man besonders deutlich, daß sich die beiden Kulissenbahnen 31, 31' in ihrem Verlauf voneinander unterscheiden. Ersichtlich wird ferner, daß über dem Umfang der Hohlzylinder 30, 30' verteilt mehrere, dabei selbstverständlich für jeden Hohlzylinder 30, 30' gleich verlaufende Kulissenbahnen 31, 31' vorgesehen sein können. Hiermit läßt sich das maximal übertragbare bzw. aufbringbare Drehmoment erheblich steigern, ferner werden hierdurch asymmetrische Krafteinwirkungen so gering als möglich gehalten.

Gegenüber der Anordnung gemäß **Figur 2** ist nun erfindungsgemäß eine erhebliche Bauraum-Reduzierung möglich, wenn - wie die **Figuren 3a, 3b** zeigen - die beiden im wesentlichen einen gleichen Durchmesser besitzenden Hohlzylinder 30, 30' mit ihren Mantelflächen ineinander verschachtelt sind. Allerdings kann mit einer derartigen Ausbildung nur einer verringerter maximaler Verdrehwinkel in der Größenordnung von 35° (zwischen den beiden Stabilisatorhälften 5, 5') erzielt werden.

Beim Ausführungsbeispiel nach **Figur 4** sind die beiden unterschiedliche Durchmesser besitzenden Hohlzylinder 30, 30' konzentrisch zueinander angeordnet, d.h. der eine Hohlzylinder 30 liegt quasi innerhalb des anderen Hohlzylinders 30'. Diese Bauweise erlaubt wieder größere Drehwinkel, erfordert jedoch wegen des zwangsläufig vergrößerten Durchmessers einen etrwas größeren Bauraum als die Variante nach **Figur 3**, baut jedoch immer noch wesentlich kompakter als die in **Figur 2** dargestellte Anordnung.

Für alle Ausführungsbeispiele gilt, daß dadurch, daß die Kräfte in diesem Kurvenbahn-Getriebe 3 an dessen äußerstem Umfang übertragen werden, sehr große Verstellmomente realisierbar sind. Als besonderer Vorteil kann durch die im Prinzip vollkommen freie Möglichkeit der Gestaltung der Kurvenbahnen 31, 31' praktisch jede beliebige und insbesondere über dem Verdrehwinkel auch variable Getriebeübersetzung hergestellt werden. Bei konstanter Getriebeübersetzung ist ferner die Verwendung mehrerer Stützrollen 33 bzw. 33' in einer einzigen Kulissenbahn 31 bzw. 31' möglich, so daß nochmals größere Drehmomente übertragen werden können. Insbesondere für diesen Fall ist auch die Verwendung einer Kugelumlaufspindel mit großer Steigung anstelle der Stützrollen 33, 33' möglich, wie überhaupt eine Vielzahl von Details insbesondere konstruktiver Art durchaus abweichend von den gezeigten Ausführungsbeispiel gestaltet sein kann, ohne den Inhalt der Patentansprüche zu verlassen. Stets erhält man einen Aktuator für eine Stabilisatoranordnung mit gegeneinander verdrehbaren Stabilisatorhälften, der sich durch einen kompakten Aufbau bei hohen Stellmomenten sowie durch eine einfache, kostengünstige Bauweise auszeichnet.

### Bezugszeichenliste:

- 1: Aktuator
- 2: Verstellantrieb
- 3: Getriebe / Kurvenbahn-Getriebe
- 30, 30': Kurvenbahn-Träger / Hohlzylinder
- 31, 31': Kurvenbahn
- 32: Koppelelement
- 32a: führender Flächenabschnitt
- 33, 33': Stützrolle
- 34: Gewindespindel
- 4: Feststellbremse
- 5, 5': Stabilisatorhälfte
- 6: Pfeilrichtung: Längsverschiebung von 32
- 7: Doppelpfeil: Verdrehbewegung von 30, 30'
- 8: Längsachse

## Patentansprüche

1. Stabilisatoranordnung für das Fahrwerk eines Kraftfahrzeuges mit einem zwischen zwei Stabilisatorhälften (5, 5') eingebundenen und diese bedarfsweise gegeneinander um einen Verdrehwinkel verdrehenden Aktuator (1), der aus einem Verstellantrieb (2) sowie einem diesem nachgeschalteten Kurvenbahn-Getriebe (3) besteht, mit zwei den Stabilisatorhälften (5, 5') zugeordneten, um eine gemeinsame Längsachse (8) gegeneinander verdrehbaren und als Kurvenbahn-Träger fungierenden Hohlzylindern (30, 30'), in deren sich voneinander unterscheidenden und sich zumindest abschnittsweise im wesentlichen in Richtung der gemeinsamen Längsachse (8) der koaxial zueinander angeordneten Hohlzylinder (30, 30') erstreckenden Kurvenbahnen (31, 31') ein mittels des Verstellantriebs (2) längs der gemeinsamen Längsachse (8) und dabei auch längs dieser Kurvenbahnen (31, 31') verschiebbares Koppelelement (32) geführt ist,
**dadurch gekennzeichnet, dass** die beiden Hohlzylinder (30, 30') ineinander verschachtelt sind.

2. Stabilisatoranordnung nach Anspruch 1,
**dadurch gekennzeichnet, dass** die beiden im wesentlichen einen gleichen Durchmesser besitzenden Hohlzylinder (30, 30') mit ihren Mantelflächen ineinander verschachtelt sind.

3. Stabilisatoranordnung nach Anspruch 1,
**dadurch gekennzeichnet, daß** die beiden unterschiedliche Durchmesser besitzende Hohlzylinder (30, 30') konzentrisch zueinander angeordnet sind.

4. Stabilisatoranordnung nach einem der vorangegangenen Ansprüche,
**dadurch gekennzeichnet, daß** das Koppelelement (32) im wesentlichen zentral innerhalb der Hohlzylinder (30, 30') angeordnet ist und zumindest zwei in die beiden Kurvenbahnen (31, 31') eingreifende Stützrollen (33, 33') aufweist.

5. Stabilisatoranordnung nach einem der vorangegangenen Ansprüche,
**dadurch gekennzeichnet, daß** das Koppelelement (32) mittels einer motorisch angetriebenen Gewindespindel (34) oder mittels einer Zylinder-Kolben-Einheit längsverschiebbar ist.

## Claims

1. An anti-roll-bar arrangement for the chassis of a motor vehicle, comprising an actuator (1) incorporated between two anti-roll-bar halves (5, 5') and rotating them relative to one another around a required angle, the actuator (1) comprising an adjusting drive (2) and a downstream cam-track drive unit (3) with two hollow cylinders (30, 30') associated with the anti-roll-bar halves (5, 5'), rotatable relative to one another around a common longitudinal axis (8) and acting as a support for the cam track, and a coupling element'(32) is guided by the adjusting drive (2) along the common longitudinal axis (8) of the coaxial cylinders (30, 30') and also along the cam tracks (31, 31'), which differ from one another and at least parts of them extend substantially in the direction of the common longitudinal axis (8),
**characterised in that** the two hollow cylinders (30, 30') are nested in one another.

2. An anti-roll-bar arrangement according to claim 1, **characterised in that** the two hollow cylinders (30, 30') have substantially the same diameter and their cylindrical surfaces are nested in one another.

3. An anti-roll-bar arrangement according to claim 1, **characterised in that** the two hollow cylinders (30, 30') have different diameters and are disposed concentrically with one another.

4. An anti-roll-bar arrangement according to any of the preceding claims, **characterised in that** the coupling element (32) is disposed substantially centrally inside the hollow cylinders (30, 30') and has at least two support rolls (33, 33') engaging in the two cam tracks (31, 31').

5. A stabiliser arrangement according to any of the preceding claims, **characterised in that** the coupling element (32) is longitudinally movable by a motor-driven threaded spindle (34) or by a cylinder-piston unit.

## Revendications

1. Dispositif de barre stabilisatrice destiné au châssis d'un véhicule automobile comprenant un actionneur (1), relié entre deux moitiés de barre stabilisatrice (5, 5') et faisant tourner celles-ci l'une contre l'autre selon les besoins autour d'un angle de rotation, qui comprend un moteur d'entraînement (2) et un engrenage (3) de glissières courbées qui alimente le moteur, comprenant deux cylindres creux (30, 30'), associés aux moitiés de barre stabilisatrice (5, 5'), servant de support aux glissières courbées et mobile l'un contre l'autre autour d'un axe longitudinal (8) commun, dans lesquels des glissières courbées (31, 31') sont différentes l'une de l'autre et s'étendent au moins partiellement essentiellement en direction de l'axe longitudinal commun (8) des cylindres creux (30, 30') disposés coaxialement l'un par rapport à l'autre, on introduit un élément de liaison (32), mobile au moyen du moteur d'entraînement (2), le long de l'axe longitudinal commun (8) et donc le long de ces glissières courbées (31, 31'),
**caractérisé en ce que**
les deux cylindres creux (30, 30') sont imbriqués l'un dans l'autre.

2. Dispositif de barre stabilisatrice selon la revendication 1,
**caractérisé en ce que**
les deux cylindres creux (30, 30') ayant un diamètre essentiellement identique sont imbriqués l'un dans l'autre avec leurs surfaces recouvrantes.

3. Dispositif de barre stabilisatrice selon la revendication 1,
**caractérisé en ce que**
les deux cylindres creux (30, 30') ayant des diamètres différents sont disposés concentriquement l'un par rapport à l'autre.

4. Dispositif de barre stabilisatrice selon une des revendications précédentes,
**caractérisé en ce que**
l'élément de liaison (32) est disposé essentiellement centralement à l'intérieur du cylindre creux (30, 30') et présente au moins deux galets de support (33, 33') introduits dans les deux glissières courbées (31, 31').

5. Dispositif de barre stabilisatrice selon une des revendications précédentes,
**caractérisé en ce que**
l'élément de liaison (32) est mobile longitudinalement au moyen d'une vis filetée (34) ou au moyen d'un ensemble cylindres-pistons.
